# DEMANDE DE BREVET EUROPEEN

(11) **EP 1 180 872 A1**
(43) Date de publication de la demande: **20.02.2002**
(21) Numéro de dépôt: 01401983.0
(22) Date de dépôt: 23.07.2001
(51) Int. Cl.: H04L 9/08

(54) **Communication sécurisée dans un équipement d'automatisme**

(30) Priorité: 18.08.2000 FR 0010875
(71) Demandeur: Schneider Electric Industries SA, 92500 Rueil-Malmaison (FR)
(72) Inventeur: Ricaud, Claude, 31300 Toulouse (FR)

(57) **Abrégé**

La présente invention concerne un équipement d'automatisme (10) apte à échanger des informations sur un réseau de communication (50) local ou global supportant le protocole TCP/IP, ces échanges étant sécurisés par l'utilisation de mécanismes à clés asymétriques (clé publique, clé privée), comme RSA ou SSL. L'équipement d'automatisme (10) comporte des premiers moyens de stockage (11) pour mémoriser ses propres clés publique (17) et privée (16), ainsi que la clé publique (47) d'un administrateur (40). L'équipement d'automatisme (10) comporte aussi des seconds moyens de stockage (12) pour mémoriser un annuaire contenant les clés publiques (27,37) d'appareils distants (20,30).

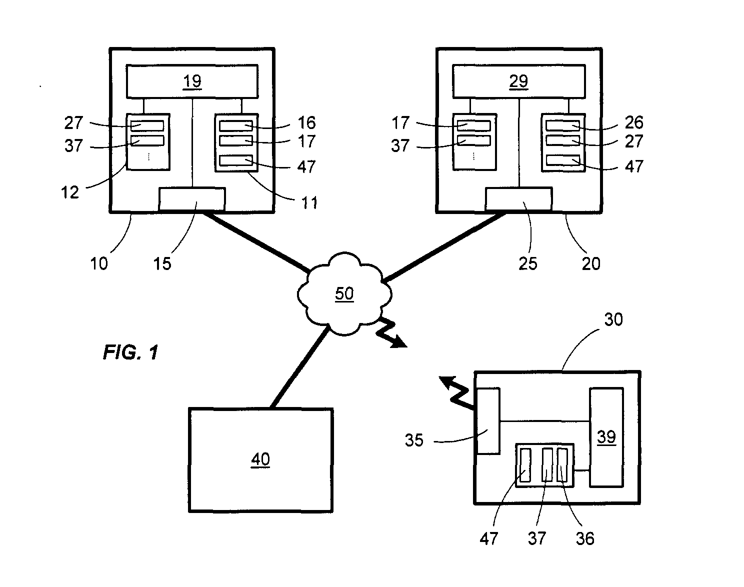

## Description

La présente invention concerne un équipement d'automatisme susceptible d'utiliser un système de communication sécurisée pour échanger des informations avec un appareil distant sur un réseau local ou global, grâce à l'emploi de clés asymétriques. Cette invention peut s'appliquer dans tout système d'automatisme, particulièrement dans le domaine des automatismes industriels manufacturiers, continus ou batch, dans le domaine des automatismes du bâtiment ou dans le contrôle/commande des réseaux électriques de distribution.

Sous le terme "équipement d'automatisme", on désignera ci-après un automate programmable, une commande numérique, une station de contrôle/commande, mais aussi tout équipement ou module d'automatisme possédant sa propre unité de traitement et capable de se connecter sur un réseau de communication local ou global, comme par exemple un module déporté d'entrées/sorties, un dispositif de régulation, un terminal de dialogue homme-machine, un variateur de vitesse. Un tel équipement d'automatisme est capable d'échanger, sur le réseau local ou global, des informations dans le but d'effectuer des fonctions de surveillance, de visualisation et de contrôle relatives à un système d'automatisme.

Le terme "appareil distant" regroupe quant à lui soit un autre équipement d'automatisme tel que défini ci-dessus, soit un ordinateur individuel, un téléphone portable, un appareil de type PDA (Personal Digital Assistant), soit un serveur informatique, tel qu'un serveur d'applications ASP (Applications Service Provider), un serveur ERP (Enterprise Resource Planning) ou tout autre système informatique. Ces appareils distants sont capables de communiquer sur le réseau local ou global dans le but d'effectuer des fonctions de surveillance, de visualisation et de contrôle relatives à un système d'automatisme. Enfin, dans la suite de l'exposé, tout équipement ou appareil capable d'émettre et de recevoir sur un réseau de communication sera également appelé un "noeud" de communication.

Dans un système d'automatisme, les programmes de certains équipements d'automatisme ou les personnes qui supervisent et contrôlent tout ou partie du système d'automatisme à partir de terminaux de dialogue s'appuient de plus en plus sur des informations provenant d'appareils distants pour effectuer une action ou prendre une décision. Ces informations relatives au système d'automatisme contiennent notamment des données, des alarmes, des consignes/mesures, des commandes, des codes programmes, des séquences audio ou vidéo, etc... Elles peuvent être véhiculées sur un réseau de communication local ou global, par exemple un réseau du type Internet, Intranet ou Extranet supportant les protocoles IP ou TCP/IP.

Il devient donc nécessaire, pour un équipement d'automatisme connecté à un tel réseau de communication, de pouvoir d'une part authentifier de façon certaine la provenance des messages qu'il reçoit et d'autre part s'assurer de la confidentialité des messages qu'il envoie. Les méthodes actuelles utilisées dans le domaine des automatismes, par exemple à base de mots de passe ou d'authentification des personnes, s'avèrent souvent insuffisantes, surtout avec l'avènement des architectures d'automatisme réparties et des réseaux WAN (Wide Area Network). Par contre, les mécanismes à clés asymétriques avec des algorithmes tels que RSA ou SSL, associés à des mécanismes de chiffrement tels que DES, triple DES ou IDEA par exemple, sont utilisés dans le monde informatique et permettent d'assurer une protection sûre et robuste.

C'est pourquoi la présente invention a pour but d'intégrer dans un équipement d'automatisme appartenant au monde des automatismes industriels, des automatismes du bâtiment ou au contrôle/commande des réseaux électriques de distribution, un mécanisme de chiffrement à clés asymétriques.

Pour cela, l'invention décrit un équipement d'automatisme comprenant une unité de traitement et des moyens de communication lui permettant d'échanger des informations relatives à un système d'automatisme avec au moins un appareil distant sur un réseau de communication local ou global. L'équipement d'automatisme se caractérise par le fait que les échanges d'informations sont sécurisés par l'utilisation de clés asymétriques délivrées par un administrateur et comprenant une clé publique et une clé privée pour chaque équipement d'automatisme. L'unité de traitement de l'équipement d'automatisme est apte à exécuter des algorithmes de chiffrement des informations à émettre et de déchiffrement des messages reçus. L'équipement d'automatisme comprend des premiers moyens de stockage pour mémoriser sa clé publique et sa clé privée, ainsi que la clé publique de l'administrateur, et comprend des seconds moyens de stockage destinés à mémoriser un annuaire contenant la clé publique d'au moins un appareil distant expéditeur.

D'autres caractéristiques et avantages vont apparaître dans la description détaillée qui suit en se référant à un mode de réalisation donné à titre d'exemple et représenté par les dessins annexés sur lesquels :
- la figure 1 représente une architecture de communication comprenant un équipement d'automatisme conforme à l'invention,
- la figure 2 détaille un équipement d'automatisme connecté à un réseau de communication local ou global et à un bus de communication local,
- la figure 3 schématise des échanges d'informations sur le réseau de communication.

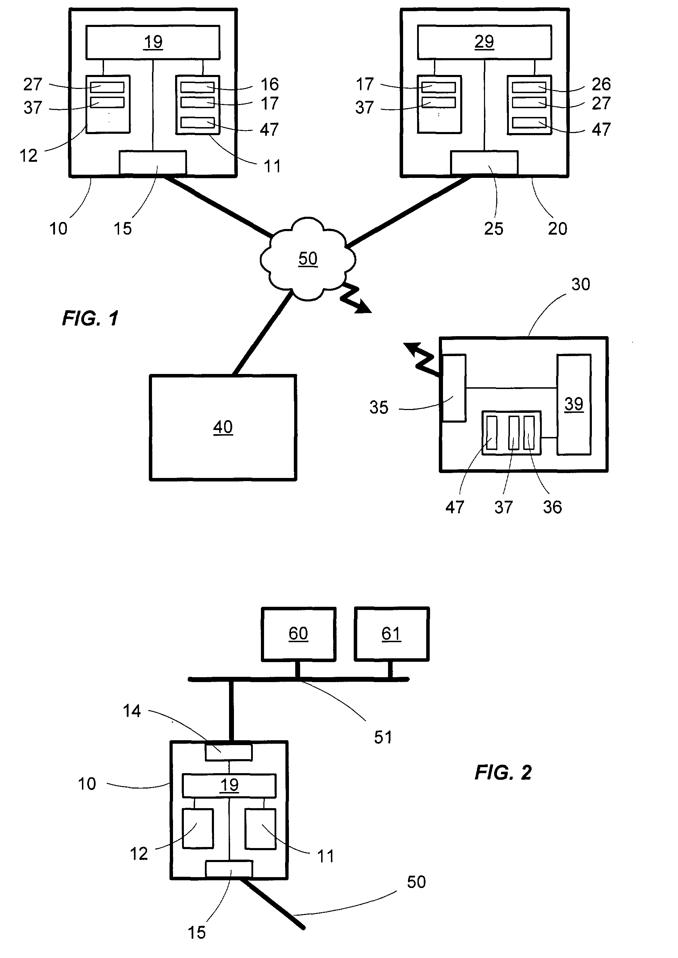

En référence à la figure 1, un équipement d'automatisme 10 comprend une unité de traitement 19 raccordée à des moyens de communication 15 permettant à l'équipement d'automatisme 10 d'échanger des informations sur un réseau de communication 50 local ou global, tel qu'un réseau du type Internet, Intranet ou Extranet supportant les protocoles IP ou TCP/IP. Ces informations contiennent par exemple des données, des alarmes, des consignes/mesures, des commandes, des codes programmes, des séquences audio ou vidéo, relatives à un système d'automatisme. Elles peuvent être échangées par un mécanisme de requête/réponse entre un client et un serveur. L'équipement d'automatisme 10 peut échanger sur le réseau 50 avec plusieurs appareils distants 20,30. Ces appareils 20,30 comprennent eux aussi une unité de traitement 29,39 raccordée à des moyens de communication 25,35 leur permettant d'échanger des informations sur le réseau 50. Les transmissions sur le réseau 50 local ou global peuvent se faire de façon équivalente avec des technologies filaires ou des technologies sans fil. Dans l'exemple présenté en figure 1, l'appareil distant 20 est également un équipement d'automatisme.

De manière connue, dans un système de communication sécurisée utilisant un principe de clés asymétriques, chaque noeud de communication 10,20,30,40 susceptible d'échanger des informations sur un réseau de communication 50, comporte une clé privée 16,26,36,46 et une clé publique 17,27,37,47. La clé publique 17 d'un noeud 10 peut être connue par tous les autres noeuds connectés au réseau 50. La clé privée 16 d'un noeud 10 est exclusivement connue par ce noeud 10. Les algorithmes de chiffrement et de déchiffrement, comme RSA ou autres, imposent que tout message codé avec une clé publique ne peut uniquement être décodé qu'avec la clé privée correspondante. Symétriquement, tout message codé avec une clé privée ne peut uniquement être décodé qu'avec la clé publique correspondante. Ainsi, dans le système de communication sécurisée utilisant un principe de clés asymétriques, tout échange d'informations entre deux noeuds nécessite d'utiliser, lors du chiffrement et du déchiffrement, l'ensemble clé privée et clé publique d'un même noeud.

Le système de communication sécurisée comporte un administrateur 40 connecté au réseau de communication 50 et qui joue le rôle d'autorité de certification des clés des autres noeuds. Dans un système d'automatisme, l'administrateur 40 peut indifféremment se situer au niveau d'un atelier autonome, d'un centre de production, d'une société ou peut être une autorité de certification centrale. L'administrateur 40 peut par ailleurs être situé dans un des appareils distants aptes à communiquer avec un équipement d'automatisme 10.

Si un noeud destinataire 20 veut authentifier de façon certaine qu'un message qu'il a reçu par le réseau de communication 50 provient bien d'un noeud expéditeur 10 bien identifié, celui-ci doit signer son message. Pour cela, l'unité de traitement 19 du noeud 10 exécute un algorithme de chiffrement de façon à coder une information à émettre en utilisant la clé privée 16 que seul le noeud 10 connaît. A réception du message, l'unité de traitement 29 du noeud destinataire 20 devra exécuter un algorithme de déchiffrement qui ne sera capable de décoder les informations reçues qu'en utilisant exclusivement la clé publique 17 du noeud 10. Ainsi, si l'information est correctement décodée, le noeud 20 peut être sûr que le message reçu provient bien du noeud 10.

De même, lorsqu'un noeud expéditeur 10 souhaite envoyer un message sur le réseau de communication 50 à un noeud destinataire 20 en étant certain de la confidentialité de ce message, l'unité de traitement 19 du noeud 10 doit exécuter un algorithme de chiffrement de façon à coder une information à émettre en utilisant la clé publique 27 du noeud destinataire 20. A réception du message, l'unité de traitement 29 du noeud destinataire 20 devra exécuter un algorithme de déchiffrement qui ne pourra décoder l'information reçue qu'en utilisant exclusivement sa clé privée 26, que seul le noeud 20 connaît. Ainsi le noeud 10 peut être sûr que le message qu'il a émis sera lu uniquement par le noeud 20.

Selon l'invention, pour mettre en place le système de communication sécurisée, l'équipement d'automatisme 10 comporte des premiers moyens de stockage 11 dans lesquels sont mémorisés la clé publique 17 et la clé privée 16 de l'équipement d'automatisme 10, ainsi que la clé publique 47 de l'administrateur 40. Ces premiers moyens de stockage 11 sont reliés à l'unité centrale 19 et peuvent être indifféremment intégrés soit dans une mémoire volatile ou non de l'équipement d'automatisme 10, soit dans un fichier disque, soit dans un système amovible tel qu'une carte à puce ou une carte au format PCMCIA insérables dans l'équipement d'automatisme 10.

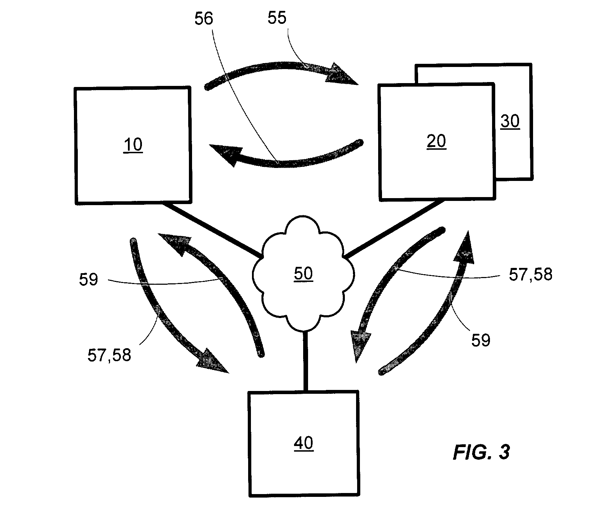

Lorsque l'équipement d'automatisme 10 veut chiffrer un message 55 (voir figure 3) à émettre de façon à ce que le destinataire soit sûr de sa provenance, l'unité de traitement 19 doit coder ce message 55 en utilisant sa clé privée 16 mémorisée dans les premiers moyens de stockage 11. De même, lorsque l'équipement d'automatisme 10 veut lire un message 56 confidentiel qui lui est destiné et qui a donc été codé avec sa clé publique 17, l'unité de traitement 19 doit décoder ce message 56 en utilisant la clé privée 16 mémorisée dans les premiers moyens de stockage 11.

L'équipement d'automatisme 10 comporte également des seconds moyens de stockage 12 dans lesquels est mémorisé un annuaire contenant la clé publique 27,37 d'au moins un appareil distant 20,30 susceptible de communiquer avec l'équipement d'automatisme 10. L'annuaire comprend par exemple la clé publique des appareils distants vers lesquels l'équipement d'automatisme 10 est autorisé à envoyer des messages 55 et/ou pour lesquels l'équipement d'automatisme 10 est autorisé à recevoir des messages 56. Les premiers et les seconds moyens de stockage 11,12 de l'équipement d'automatisme 10 peuvent indifféremment être intégrés dans des supports identiques ou différents.

Lorsque l'équipement d'automatisme 10 veut authentifier la provenance d'un message reçu 56, l'unité de traitement 19 doit décoder ce message en utilisant une clé publique 27,37 de l'annuaire mémorisé dans les seconds moyens de stockage 12. L'appareil distant 20,30 émetteur du message reçu 56 sera celui dont la clé publique 27,37 aura permis de décoder correctement le message reçu. De même, lorsque l'équipement d'automatisme 10 veut envoyer un message confidentiel 55 uniquement vers un appareil distant 20, l'unité de traitement 19 doit coder ce message confidentiel 55 en utilisant la clé publique 27 de cet appareil distant 20.

Le système de communication sécurisée décrit est sous l'autorité de l'administrateur 40 dont le rôle consiste notamment à mettre à jour les annuaires des différents noeuds 10,20,30 du réseau de communication 50 en validant l'authenticité des clés publiques. L'administrateur 40 comporte une clé privée 46, non représentée sur les figures, qu'il est le seul à connaître correspondant avec une clé publique 47 connue des différents noeuds du réseau 50.

Pour garantir l'authenticité, diffuser et mettre à jour les clés publiques 17,27,37 des différents noeuds 10,20,30, l'administrateur 40 est capable d'émettre un message de validation 59, contenant une information permettant de valider une ou plusieurs clés publiques. Ce message de validation 59 est codé avec la propre clé privée 46 de l'administrateur 40. Un équipement d'automatisme 10 recevant un tel message de validation 59 peut le décoder en utilisant la clé publique 47 de l'administrateur 40 mémorisée dans les premiers moyens de stockage 11, ce qui lui permet d'authentifier de façon sûre que l'expéditeur du message de validation 59 est bien l'administrateur 40 et donc que l'information permettant de valider une ou plusieurs les clés publiques est sûre. L'équipement d'automatisme 10 peut alors gérer et mettre à jour son annuaire mémorisé dans les seconds moyens de stockage 12.

Lorsqu'un équipement d'automatisme 10 se connecte à un réseau de communication 50, il doit informer de sa présence les autres noeuds présents sur le réseau 50. Pour cela, l'unité de traitement 19 de l'équipement d'automatisme 10 émet à destination de l'administrateur 40 une demande de déclaration 57 contenant la clé publique 17 de l'équipement d'automatisme 10. Cette demande de déclaration 57 est codée en utilisant la clé publique 47 de l'administrateur 40. Celui-ci décode la demande de déclaration 57 avec sa propre clé privée 46, vérifie la validité de la clé publique 17 reçue et peut alors émettre un message de validation 59 contenant une information permettant de valider cette clé publique 17 pour que les appareils distants 20,30 puissent mettre à jour leur annuaire.

De même, un équipement d'automatisme 10 peut à tout moment demander à l'administrateur 40 une validation d'une ou plusieurs clés publiques 27,37 d'appareils distants 20,30. Pour cela, il émet une demande de validation 58 codée avec sa propre clé privée 16, ce qui permet à l'administrateur 40 d'identifier de façon sûre l'expéditeur de cette demande 58. Après décodage au moyen de la clé publique 17 et analyse de la demande de validation 58, l'administrateur 40 pourra renvoyer un message de validation 59 contenant une information permettant de valider la(les) clé(s) publique(s) 27,37.

Selon un mode de réalisation préféré, les demandes de déclaration 57 et les demandes de validation 58 peuvent être envoyées par l'unité de traitement 19 automatiquement lors de la connexion de l'équipement d'automatisme 10 au réseau de communication 50, ainsi qu'à l'initiative d'un programme exécuté par l'unité de traitement 19 (par exemple à la suite d'une mise sous tension ou d'une réinitialisation).

Le système de communication sécurisée à clés asymétriques décrit dans la présente invention est utilisable pour l'ensemble des communications entre un équipement d'automatisme et un appareil distant, mais il peut aussi n'être utilisé que pour ouvrir une session entre un équipement d'automatisme et un appareil distant. Dans ce dernier cas, l'utilisation du mécanisme à clés asymétriques permet d'ouvrir de façon sûre une session de communication entre deux noeuds leur permettant alors de s'échanger une clé commune symétrique. Cette clé commune symétrique plus simple sera ensuite utilisée par les deux noeuds pour leurs échanges réciproques à l'intérieur de cette même session (par exemple à l'aide d'un mécanisme de chiffrement DES). Ainsi, une fois la session ouverte de façon sûre, les échanges entre deux noeuds pourront se faire d'une manière plus rapide et moins lourde.

La figure 2 détaille un équipement d'automatisme 10 d'une part connecté au réseau de communication 50 par les moyens de communication 15 et d'autre part connecté à un bus de communication local 51 grâce à une interface 14. Sur ce bus de communication 51, qui peut être par exemple un bus de terrain ou un bus de fond de panier de l'équipement d'automatisme 10, des modules 60,61 sont susceptibles de communiquer avec l'équipement d'automatisme 10 selon un protocole donné ne comportant pas de système de sécurité particulier. Si un module 60,61 désire communiquer avec un appareil distant 20,30 à travers le réseau de communication 50, l'équipement d'automatisme 10 doit alors servir de passerelle. Pour cela, quand l'interface 14 reçoit un message émis par un module 60,61, elle le transmet à l'unité de traitement 19 qui code ce message suivant le système de communication sécurisée précédemment décrit, avant de l'envoyer sur le réseau 50 via les moyens de communication 15. De même, quand l'unité de traitement 19 décode un message sécurisé venant du réseau de communication 50 et à destination d'un module 60,61, elle sera en mesure de le transmettre sur le bus 51 via l'interface 14. On obtient ainsi une communication permettant à des appareils distants 20,30 d'échanger des informations de façon sécurisée avec des modules 60,61 connectés à un équipement d'automatisme 10.

Il est bien entendu que l'on peut, sans sortir du cadre de l'invention, imaginer d'autres variantes et perfectionnements de détail et de même envisager l'emploi de moyens équivalents.

## Revendications

1. Equipement d'automatisme (10) comprenant une unité de traitement (19) et des moyens de communication (15) lui permettant d'échanger des informations relatives à un système d'automatisme avec au moins un appareil distant (20,30) sur un réseau de communication local ou global (50), **caractérisé par le fait que** :
- les échanges d'informations sont sécurisés par l'utilisation de clés asymétriques, délivrées par un administrateur (40) et comprenant une clé publique (17,27) et une clé privée (16,26) pour chaque équipement d'automatisme (10,20) communicant sur le réseau de communication (50),
- l'équipement d'automatisme (10) comprend des premiers moyens de stockage (11) pour mémoriser sa clé publique (17) et sa clé privée (16), ainsi que la clé publique (47) de l'administrateur (40),
- l'unité de traitement (19) de l'équipement d'automatisme (10) est apte à exécuter un algorithme de chiffrement pour les informations émises par l'équipement d'automatisme (10),
- l'unité de traitement (19) de l'équipement d'automatisme (10) est apte à exécuter un algorithme de déchiffrement pour les messages reçus par l'équipement d'automatisme (10).

2. Equipement d'automatisme selon la revendication 1, **caractérisé par le fait qu'**il comprend des seconds moyens de stockage (12) destinés à mémoriser un annuaire contenant la clé publique (27,37) d'au moins un appareil distant (20,30) susceptible de communiquer avec l'équipement d'automatisme (10).

3. Equipement d'automatisme selon la revendication 2, **caractérisé par le fait que** l'unité de traitement (19) de l'équipement d'automatisme (10) gère l'annuaire contenu dans les seconds moyens de stockage (12), en fonction de messages de validation (59) reçus et authentifiés en utilisant la clé publique (47) de l'administrateur (40) mémorisée dans les premiers moyens de stockage (11) de l'équipement d'automatisme (10).

4. Equipement d'automatisme selon la revendication 3, **caractérisé par le fait que** l'unité de traitement (19) de l'équipement d'automatisme (10) est capable de générer une demande de déclaration (57) contenant la clé publique (17) de l'équipement d'automatisme (10), cette demande de déclaration (57) pouvant être émise lors du raccordement de l'équipement d'automatisme (10) sur le réseau de communication (50) ou à l'initiative d'un programme exécuté par l'unité de traitement (19).

5. Equipement d'automatisme selon la revendication 3, **caractérisé par le fait que** l'unité de traitement (19) de l'équipement d'automatisme (10) est capable de générer une demande de validation (58) de la clé publique (27,37) d'au moins un appareil distant (20,30), cette demande de validation (58) pouvant être émise lors du raccordement de l'équipement d'automatisme (10) sur le réseau de communication (50) ou à l'initiative d'un programme exécuté par l'unité de traitement (19).

6. Equipement d'automatisme selon la revendication 1, **caractérisé par le fait que** les premiers moyens de stockage (11) sont intégrés dans une carte à puce insérable dans l'équipement d'automatisme (10).

7. Equipement d'automatisme selon la revendication 1, **caractérisé par le fait que** les premiers moyens de stockage (11) sont intégrés dans une carte au format PCMCIA insérable dans l'équipement d'automatisme (10).

8. Equipement d'automatisme selon l'une des revendications précédentes, **caractérisé par le fait que** le réseau de communication (50) supporte les protocoles IP ou TCP/IP.
